# EUROPÄISCHE PATENTANMELDUNG

(11) **EP 1 011 273 A2**
(43) Veröffentlichungstag der Anmeldung: **21.06.2000**
(21) Anmeldenummer: 99125105.9
(22) Anmeldetag: 16.12.1999
(51) Int. Cl.: H04Q 3/00

(54) **Aufbau einer Telekommunikationsverbindung zu einem Teilnehmer, dem mehrere mögliche Verbindungsziele zugeordnet sind**

(30) Priorität: 16.12.1998 DE 19858112
(71) Anmelder: SIEMENS AKTIENGESELLSCHAFT, 80333 München (DE)
(72) Erfinder: Rau, Helmut, 82110 Germering (DE); Linder, Hermann, 84405 Dorfen (DE)

(57) **Zusammenfassung**

Ein Verfahren zum Aufbau einer Telekommunikationsverbindung von einer rufenden Station (RST) zu einem Teilnehmer (TNR), dem mehrere mögliche Verbindungsziele (MAN,FAN,CAN,AAN) in einem oder mehreren Telekommunikationsnetzen (FTN,MFN,ZTN) zugeordnet sind und für den über eine Vermittlungsstelle (VST) in einem ersten Netz (FTN) ein erster Anschluss (FAN) eingerichtet ist. In der Datenbasis (DAB) der Vermittlungsstelle (VST) wird ein dem Teilnehmer zugeordnetes Ruflenkmerkmal (RLX) überprüft; falls dieses gesetzt ist, wird ein Ruflenkmodul (RLM) aktiviert. Dieses durchsucht die Datenbasis (DAB) nach dem Teilnehmer (TNR) zugeordneten Ruflenkeinträgen (RLE) betreffend die Verbindungsziele (MAN,FAN, AAN,CAN) und führt Verbindungsversuche zu den Verbindungszielen anhand der Ruflenkeinträge (RLE) in der spezifizierten Reihenfolge durch. Für jeden durchgeführten Verbindungsversuch wird festgestellt, ob dieser erfolgreich ist - falls nicht, wird aus den Ruflenkeinträgen (RLE) Information hinsichtlich eines nächsten durchzuführenden Verbindungsversuchs bestimmt und in Abhängigkeit von dieser Information mit einem nächsten Verbindungsversuch fortgesetzt oder mit einer Signalisierung an die rufende Station (RST) abgebrochen.

## Beschreibung

Die Erfindung betrifft ein Verfahren zum Aufbau einer Telekommunikationsverbindung von einer rufenden Station zu einem Teilnehmer eines ersten Telekommunikationsnetzes, in welchem für den Teilnehmer ein erster Anschluss über eine Vermittlungsstelle mit einer teilnehmer- und/oder anschlussbezogene Daten enthaltenden Datenbasis eingerichtet ist, bei welchem bei der Vermittlungsstelle eine Anforderung der rufenden Station für eine Verbindung zu dem Teilnehmer eintrifft.

Ebenso betrifft die Erfindung eine Vermittlungsstelle für ein Telekommunikationsnetz, in welcher für Teilnehmer Anschlüsse einrichtbar sind und bei welcher eine teilnehmer- und/oder anschlussbezogene Daten enthaltenden Datenbasis vorgesehen ist.

Grundsätzlich ist in einem Telekommunikationsnetz, z.B. einem Telefonnetz, einem Teilnehmer ein Anschluss zugeordnet. Wenn diesen Teilnehmer eine rufende Station, beispielsweise ein anderer Teilnehmer, über eine Telekommunikationsverbindung zu erreichen wünscht, so erfolgt die Verbindungsherstellung zu dem Teilnehmer mittels der Rufnummer des Teilnehmeranschlusses: Das Netz stellt aufgrund der Rufnummer den Ruf dem an den spezifizierten Anschluss angeschlossenen Endgerät zu. Falls freilich der Teilnehmer den Ruf nicht annimmt (z.B. weil er sich nicht am Ort des Endgeräts aufhält), ist der Ruf nicht zustellbar - der Teilnehmer 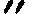 hebt nicht ab".

Oft kommen einem Benutzer mehrere Anschlüsse zu, die je nach Aufenthaltsort, Aktivierung eines spezifischen Endgerätes oder ähnlichen Gesichtspunkten als Zielanschlüsse für Rufe, welche für den Benutzer ankommen, geeignet sind. Ein häufig vorkommendes Beispiel ist der Fall, daß ein Benutzer einen drahtgebundenen Anschluss in einem Telefonfestnetz und zusätzlich einen Mobilanschluss in einem öffentlichen Mobilfunknetz hat. Der Benutzer verwendet naheliegenderweise unterwegs sein Mobilgerät für den Mobilanschluss, will jedoch, wenn er zu Hause ist, bevorzugt über das an den Festnetzanschluss angeschlossene Telefon erreicht werden.

Somit besteht für einen Benutzer, welchem neben einem ersten Anschluss weitere Anschlüsse zur Verfügung stehen, zwischen denen er häufig oder regelmäßig wechselt, der Wunsch, für ankommende Rufe unter einer Rufnummer, nämlich jener des ersten Anschlusses, erreichbar zu sein. Es sei an dieser Stelle angemerkt, daß unter einem Anschluss in einem Telekommunikationsnetz im allgemeinen die technische Realisierung einer Verbindungsmöglichkeit einschließlich der hierfür einzurichtenden Einstellungen in Netzknoten bzw. in deren Datenbanken verstanden wird.

Eine bekannte Lösung hierfür verwendet Rufumleitungen von den nicht nutzbaren Anschlüssen zu jenem, welchen der Teilnehmer nutzen möchte. Die Rufumleitungen müssen von dem Teilnehmer jeweils bei Betreten bzw. Verlassen des dem Anschluss zugeordneten Bereiches aktiviert und deaktiviert werden. Diese Lösung, die eigentlich für einen nur gelegentlichen oder vorübergehenden Aufenthalt bei einem fremden Anschluss konzipiert wurde, ist für den Teilnehmer lästig und besonders bei einer größeren Anzahl von Anschlüssen umständlich.

Ein anderer Lösungsansatz besteht darin, bei einem ankommenden Ruf für die dem Benutzer zugeordneten Anschlüsse jeweils einen Rufzustellversuch durchzuführen. Eine derartige Dienstleistung kann in einem sogenannten Intelligenten Netz erbracht werden, in dem bekanntermaßen Zusatzdienste von einem hierfür vorgesehenen besonderen Netzknoten, dem sogenannten Dienstesteuerknoten ('service control point', SCP), durchgeführt werden; jedoch erfordert dies eine entsprechende Signalisierung zwischen den Netzknoten eines Netzes und dem Dienstesteuerknoten, in dem eine entsprechende, von den Datenbasis der Vermittlungsstelle unabhängigen Datenbasis eingerichtet werden muss. Außerdem muss bei einem Ruf für den betrachteten Teilnehmer erst eine Signalisierung zwischen der dem Anschluss zugeordneten Vermittlungsstelle und dem Dienstesteuerknoten hergestellt werden. Nicht zuletzt ist in Netzen, die keinen Dienstesteuerknoten oder ähnliche Einrichtungen aufweisen, diese Art der Rufzustellung nicht möglich. Nicht selten ist nämlich das Netz, in welchem der erste Anschluss des Teilnehmers eingerichtet ist, ein Festnetz ohne 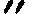 Intelligente" Betriebsmittel.

Des weiteren ist eine bedingte Rufumleitung ('call forwarding on busy') allgemein bekannt, welche auch in Festnetzen realisierbar ist. Bei dieser Lösung wird ein ankommender Ruf zu dem ersten Anschluss des Teilnehmers gestellt; falls dieser belegt ist, wird der Ruf an einen Ausweichanschluss geleitet. Eine ähnliche Lösung ist die von einigen digitalen Vermittlungssystemen her bekannte parallele Rufzustellung für zwei Anschlüsse, worin der Ruf schließlich zu einer Verbindung bei jenem Anschluss führt, bei welchem zuerst der Ruf angenommen wird. Für beide Lösungen ist nachteilig, daß sie die Behandlung von nicht mehr als zwei Anschlüssen des Teilnehmers gestatten. Außerdem ist eine Einflussnahme auf die Reihenfolge der einzelnen Rufversuche nicht möglich.

Es ist daher Aufgabe der Erfindung, die Erreichbarkeit eines Teilnehmers über eine Anzahl von zwei oder mehr Anschlüssen zu ermöglichen, wobei an die Endgeräte des Teilnehmers keine besonderen Anforderungen zu stellen sind und auch der Realisierungsaufwand auf seiten des betroffenen Telekommunikationsnetzes möglichst gering sein soll. Hierbei soll die der Rufzustellung zugrunde zu legende Reihung der Anschlüsse frei gestaltbar sein.

Diese Aufgabe wird von einem Verfahren der eingangs genannten Art gelöst, bei welchem erfindungsgemäß seitens der Vermittlungsstelle auf das Eintreffen der Verbindungsanforderung hin in der Datenbasis ein dem ersten Anschluss zugeordnetes Ruflenkmerkmal überprüft wird, und falls dieses gesetzt ist, ein Ruflenkmodul aktiviert wird, durch welches
a) die Datenbasis nach dem Teilnehmer zugeordneten Ruflenkeinträgen durchsucht wird, welche in dem ersten Telekommunikationsnetz und/oder in anderen Netzen eingerichtete Anschlüsse als dem Teilnehmer zugeordnete Verbindungsziele angeben, und
b) anhand der derart aufgefundenen Ruflenkeinträge Verbindungsversuche zu den Verbindungszielen in einer durch die Ruflenkeinträge spezifizierten Reihenfolge durchgeführt werden,
wobei für jeden durchgeführten Verbindungsversuch festgestellt wird, ob dieser erfolgreich ist, z.B. weil eine Verbindung zwischen der rufenden Station und dem betreffenden Anschluss durchgestellt wird, und
- im Erfolgsfalle weitere Verbindungsversuche, welche zufolge der Ruflenkeinträge durchzuführen wären, unterlassen werden,
- ansonsten aus den Ruflenkeinträgen Information hinsichtlich eines nächsten durchzuführenden Verbindungsversuchs bestimmt wird und in Abhängigkeit von dieser Information mit einem nächsten Verbindungsversuch fortgesetzt oder mit einer Signalisierung an die rufende Station abgebrochen wird.

Diese Lösung gestattet die Durchführung eines Verbindungsaufbaus zu einem Teilnehmer, dem mehrere mögliche Verbindungsziele in einem oder mehreren Telekommunikationsnetzen zugeordnet sind, auf einfache Weise. Die Erfindung ist für bekannte Endgeräte realisierbar; abgesehen von der Vermittlungsstelle sind keine Änderungen an Komponenten des Netzes oder Komponenten anderer Netze erforderlich. Im Gegenteil erübrigt es sich, für den Teilnehmer zusätzliche Einträge in anderen Netzknoten desselben oder anderer Netze einzurichten. Im Gegensatz zu einer Rufumleitung gewährt die Erfindung die zuverlässige Rufzustellung ohne laufende Betreuung durch den Benutzer; dies verringert überdies den Signalisierungsaufwand seitens des ersten Netzes. Gegenüber der Architektur intelligenter Netze bringt die Erfindung eine Vereinfachung der Verwaltung, da nicht eine zusätzliche Datenbasis - nämlich in einem Dienstesteuerknoten - eingerichtet werden muss; zudem erreicht sie eine Vereinfachung und Beschleunigung der Signelisierung, da der Dialog zwischen der Vermittlungsstelle und einem Dienstesteuerknoten entfällt.

In einer vorteilhaften Ausführungsform des erfindungsgemäßen Verfahrens, welche die Einbindung bekannter Rufumleitungen in die Ruflenkung und eine flexiblere Handhabung von Rufumleitungen gestattet, wird ein Verbindungsversuch als erfolgreich bewertet, falls
- eine Verbindung zu dem betreffenden Anschluss durchgestellt wird oder
- der betreffende Anschluss bereits belegt oder das diesem zugeordnete Endgerät nicht erreichbar ist und aufgrund eines Hinweises in den Ruflenkeinträgen auf eine für diesen Fall wirksame Rufumleitung ein Verbindungsversuch zu einem durch die Rufumleitung spezifizierten Anschluss durchgeführt wird.

Es ist des weiteren günstig im Sinne eines einfachen und schnellen Zugriffes auf die Datenbasis, wenn die Vermittlungsstelle der Verbindungsanforderung eine dem ersten Anschluss zugeordnete erste Rufnummer entnimmt und diese bei dem Durchsuchen der Datenbasis als Suchbegriff verwendet wird.

Ebenso ist es günstig, da dies eine einfache Behandlung der Rufzustellung mit sich bringt, wenn den Ruflenkeinträgen den Verbindungszielen zugeordnete Rufnummern entnommen und die Verbindungsversuche mit einer Rufzustellung zu jeweils einer dieser Rufnummern initiiert werden.

In einer weiteren vorteilhaften Ausführungsform der Erfindung erfolgt bei einem Verbindungsversuch zu einem in einem fremden Netz befindlichen Verbindungsziel die Rufzustellung mittels einer Rufnummer, welche aus der ersten Rufnummer abgeleitet wird. Dadurch ist es möglich, daß der Teilnehmer in den beteiligten Netzen über ein und dieselbe Rufnummer erreichbar ist, und in dem fremden Netz entfällt die Notwendigkeit, dem Teilnehmer eine eigene Rufnummer zuzuteilen.

Hierbei ist es zur Vereinfachung des Routings in das fremde Netz sowie der Führung der Ruflenkeinträge zweckmäßig, wenn die abgeleitete Rufnummer aus der ersten Rufnummer durch Hinzufügen eines Routing-Präfix abgeleitet wird.

Eine bevorzugte Ausführungsform des erfindungsgemäßen Verfahrens, für welche die genannten Vorteile im besonderen nützlich sind, wird für als Telefonnetze ausgeführte Telekommunikationsnetze durchgeführt.

Des weiteren ergeben sich die genannten besonderen Vorteile, insbesondere hinsichtlich der einfachen Realisierung ohne Eingriff in die bestehenden Endgeräte oder beteiligten fremden Netze, wenn das erste Netz ein privates Telefonnetz ist.

Zudem ist es vorteilhaft, wenn die Verbindungsziele, welche nicht in dem ersten Telekommunikationsnetz eingerichtet sind, zumindest jedoch ein Teil dieser Ziele, sich auf in Mobilfunknetzen eingerichtete Anschlüsse beziehen. Dies erbringt eine netzübergreifende Koordination der Erreichbarkeit eines Benutzers, welcher auch in einem (oder mehreren) Mobilnetzen als Teilnehmer angemeldet ist, ohne die Mobilitätsdienste des Mobilnetzes in Anspruch nehmen zu müssen; vielmehr kann der Benutzer die Rufumlenkung vollständig von dem ersten Netz aus, beispielsweise über einen im ersten Netz installierten Dienst, einrichten und warten.

Die oben genannte Aufgabe wird ebenso ausgehend von einer Vermittlungsstelle der eingangs genannten Art erfindungsgemäß durch eine Vermittlungsstelle mit einem Ruflenkmodul gelöst, welches infolge eines bei der Vermittlungsstelle eintreffenden Anforderung einer rufenden Station für eine Verbindung zu einem der Vermittlungsstelle zugeordneten Teilnehmer, für welchen in der Vermittlungsstelle ein erster Anschluss eingerichtet ist, aktivierbar und dazu eingerichtet ist,
a) die Datenbasis nach dem Teilnehmer zugeordneten Ruflenkeinträgen zu durchsuchen, welche in dem ersten Telekommunikationsnetz und/oder in anderen Netzen eingerichtete Anschlüsse als dem Teilnehmer zugeordnete Verbindungsziele angeben, und
b) anhand der derart aufgefundenen Ruflenkeinträge Verbindungsversuche zu den Verbindungszielen in einer durch die Ruflenkeinträge spezifizierten Reihenfolge durchzuführen,
und hierbei für jeden durchgeführten Verbindungsversuch festzustellen, ob dieser erfolgreich ist, z.B. aufgrund des Durchstellens einer Verbindung zwischen der rufenden Station und dem betreffenden Anschluss, und
- im Erfolgsfalle weitere Verbindungsversuche, welche zufolge der Ruflenkeinträge durchzuführen wären, zu unterlassen,
- ansonsten in Abhängigkeit von aus den Ruflenkeinträgen bestimmter Information hinsichtlich eines nächsten durchzuführenden Verbindungsversuchs mit diesem Verbindungsversuch fortzusetzen oder mit einer Signalisierung an die rufende Station abzubrechen.

Die Vorteile dieser Lösung sowie ihrer nachstehend genannten bevorzugten Ausführungsformen wurden, soweit Vorteile nicht ausdrücklich genannt werden, im Zusammenhang mit dem erfindungsgemäßen Verfahren bereits genannt.

In einer bevorzugten Ausführungsform der erfindungsgemäßen Vermittlungsstelle ist das Ruflenkmodul dazu eingerichtet, einen Verbindungsversuch, als erfolgreich zu bewerten:
- aufgrund des Durchstellens einer Verbindung zwischen der rufenden Station und dem betreffenden Anschluss oder
- aufgrund der Feststellung, daß der betreffende Anschluss bereits belegt oder das diesem zugeordnete Endgerät nicht erreichbar ist sowie in den Ruflenkeinträgen auf eine für diesen Fall wirksame Rufumleitung gesetzt ist.

Es ist des weiteren günstig, wenn das Ruflenkmodul dazu eingerichtet ist, dem Durchsuchen der Datenbasis eine der Verbindungsanforderung entnommene, dem ersten Anschluss zugeordnete erste Rufnummer als Suchbegriff zugrunde zu legen.

Ebenso ist es günstig, wenn in den Ruflenkeinträgen den Verbindungszielen zugeordnete Rufnummern angegeben sind, welche in den Verbindungsversuchen als Zielrufnummern verwendbar sind.

Vorteilhafterweise ist in der Datenbasis für Teilnehmeranschlüsse bzw. Teilnehmerrufnummern ein Ruflenkmerkmal vorgesehen, welches anzeigt, ob bei einer Verbindungsanforderung für den betreffenden Teilnehmer das Ruflenkmodul zu aktivieren ist. Diese Lösung gestattet das Einrichten der erfindungsgemäßen Ruflenksteuerung auf einfache Weise, ohne die Funktionsweise bereits bestehender Dienste oder Merkmale, die in der Datenbasis eingetragen sind, zu beeinträchtigen.

Eine bevorzugte Ausführungsform der erfindungsgemäßen Vermittlungsstelle ist günstigerweise als Telefonvermittlungsstelle realisiert.

Ebenso ist es günstig, wenn die Vermittlungsstelle als Nebenstellenanlage für ein privates Telefonnetz realisiert ist.

Zudem ist es vorteilhaft, wenn die Verbindungsziele, welche nicht in dem ersten Telekommunikationsnetz eingerichtet sind, zumindest jedoch ein Teil dieser Ziele, als in Mobilfunknetzen eingerichtete Anschlüsse realisiert sind.

Die Erfindung wird im folgenden anhand eines Ausführungsbeispieles näher erläutert, welches die Ruflenkung für einen Teilnehmer eines Telefon-Festnetzes betrifft. Dabei werden die beigefügten Figuren herangezogen, welche zeigen:
- Fig. 1: eine schematische Übersicht der wesentlichen Komponenten der am Ausführungsbeispiel beteiligten Netze und Netzteilnehmer;
- Fig. 2: einen beispielhaften Signalisierungsablauf .

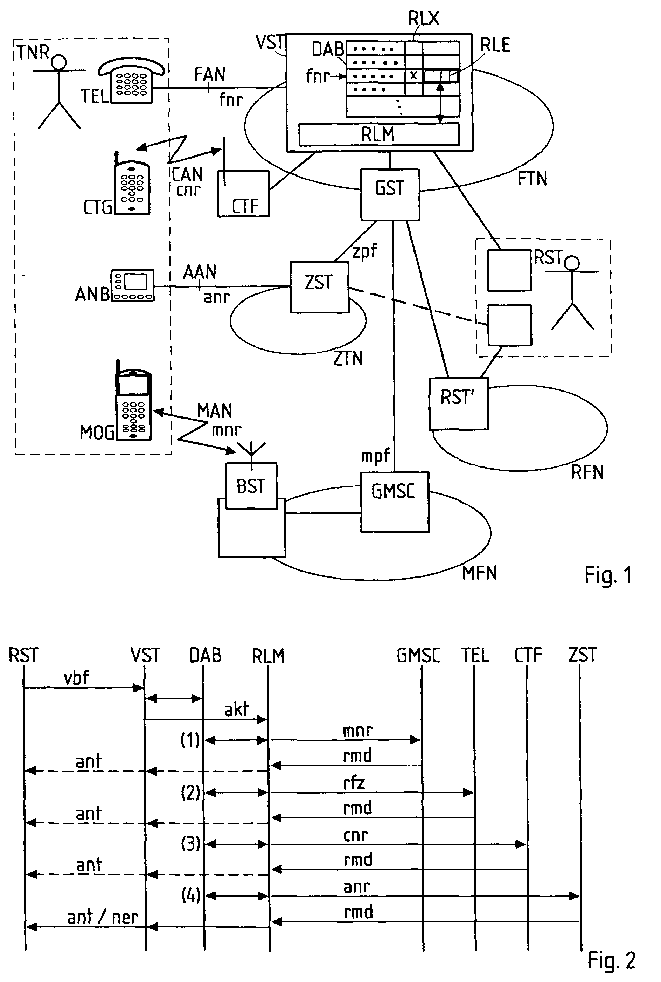

Das Ausführungsbeispiel geht von dem in Fig. 1 links oben gezeigten Benutzer oder Teilnehmer TNR aus, welcher in einem öffentlichen Telefonfestnetz FTN einen drahtgebundenen Anschluss FAN zu einer Vermittlungsstelle VST des Netzes FTN hat. Der Festnetzanschluss FAN ist der 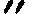 erste Anschluss" des Teilnehmers im Sinne der Erfindung. An den Anschluss FAN ist beispielsweise ein in der Wohnung des Benutzers TNR befindliches Telefongerät TEL angeschlossen; ebenso könnte der Teilnehmer TNR als Festnetz-Endeinrichtung TEL auch eine Haustelefonanlage oder eine Schnurlos-Telefonanlage bekannter Art verwenden.

Die Vermittlungsstelle VST weist eine Datenbank DAB auf, welche nach bekannter Art für jeden Teilnehmer bzw. Anschluss der Vermittlungsstelle VST teilnehmer- und/oder anschlussbezogene Daten (in Fig. 1 der Einfachheit halber durch kleine Quadrate symbolisiert) enthält. Für jeden Teilnehmer bzw. Anschluss ist dabei ein Teilnehmereintrag vorgesehen; in Fig. 1 stellt jeweils eine Zeile der Datenbank DAB einen Teilnehmereintrag dar. Als Suchindex für die Datenbank DAB wird beispielsweise die einem Anschluss bzw. Teilnehmer zugeordnete Rufnummer verwendet. Im Beispiel der Fig. 1 ist der dritte Teilnehmereintrag dem Teilnehmer TNR, genauer gesagt seiner Rufnummer fnr ( 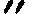 Erstrufnummer"), zugeordnet. Zufolge der Erfindung wird die Datenbank um zusätzliche Daten erweitert, nämlich für jeden Teilnehmereintrag um ein Ruflenkmerkmal RLX sowie in Abhängigkeit von dem Ruflenkmerkmal um weitere Einträge RLE; diese werden weiter unten eingehend behandelt.

Zusätzlich zu dem Erstanschluss FAN kann der Benutzer TNR über weitere Verbindungsziele erreichbar sein. Diese Verbindungsziele können über Anschlüsse des Festnetzes FTN oder anderer Netze erreichbare Endgeräte sein. In Fig. 1 sind beispielhaft ein Mobilgerät MOG, ein Schnurlosteil CTG und ein Anrufbeantworter ANB des Benutzers gezeigt. Das Mobilgerät MOG ist beispielsweise in einem öffentlichen Mobilfunknetz MFN, beispielsweise einem GSM-Netz bekannter Art, für einen Mobilanschluss MAN angemeldet. Das Schnurlosteil CTG ist z.B. ein Firmentelefon zur Nutzung im Bereich einer als Schnurlosanlage CTF - z.B. nach dem bekannten DECT-Standard - realisierten Hausanlage, welche in der den Benutzer beschäftigenden Firma installiert ist; dem Schnurlosteil CTG des Benutzers TNR ist ein Schnurlos-Anschluss CAN zugeordnet. Der Anrufbeantworter ANB ist in dem gezeigten Ausführungsbeispiel an einem drahtgebundenen Anschluss AAN angeschlossen, welcher von einem zusätzlichen Anschlussknoten ZST eines zweiten Festnetzes ZTN zur Verfügung gestellt wird. Das zweite Festnetz ZTN kann ein von dem ersten Festnetz FTN unabhängig betriebenes öffentliches Telefonnetz sein oder ein Teilnetz des Festnetzes FTN, z.B. ein Lokalvermittlungsbereich oder ein an das Festnetz angeschlossenes privates Netz.

Die in Fig. 1 gezeigten Kommunikationsnetze FTN,MFN,ZTN einschließlich des weiter unten Rufernetzes RFN sind untereinander verbunden, sodaß die Herstellung von Telekommunikationsverbindungen zwischen den Netzen möglich ist. Die Vernetzung der Kommunikationsnetze untereinander erfolgt nach bekannter Art, z.B. über sogenannte Gateway-Netzknoten GST,GMSC; die Art der Vernetzung ist für die Erfindung nicht weiter von Belang.

Es ist anzumerken, daß die dem Teilnehmer TNR zugeordneten Endgeräte TEL,CTG,ANB,MOG sich selbstverständlich an verschiedenen Standorten oder - wie im Falle des Schnurlosteiles CTG und des MobilteileS MOG - sogar an veränderlichen Orten befinden können. Auch kann in besonderen Fällen ein Endgerät des Teilnehmers mehreren Anschlüssen zugeordnet sein; beispielsweise kann der Teilnehmer über ein Mehrfunktionengerät, z.B. ein sogenanntes Dual-Mode-Handy, verfügen und dieses sowohl für den Schnurlos-Anschluss CAN als auch für den Mobilanschluss MAN nutzen.

Nach der Erfindung ist nun der Benutzer stets unter der Rufnummer fnr, die dem Erstanschluss FNR zugeordnet ist, erreichbar, und zwar auch dann, wenn er den Ruf nicht über das an den Erstanschluss angeschlossenen Endgerät TEL, sondern statt dessen über ein anderes mögliches Verbindungsziel entgegennehmen kann (oder will). Die Zielsetzung der Zuordnung einer gleichbleibenden Rufnummer für einen Benutzer, unabhängig von dem verwendeten Anschluss, ist auch unter dem englischsprachigen Schlagwort 'one number' ( 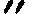 Eine Nummer") bekannt. Zu diesem Zweck ist in der Vermittlungsstelle VST ein Ruflenkmodul RLM vorgesehen, welche eine Steuerlogik für die erfindungsgemäße Rufzustellung von für den Benutzer TNR hereinkommende Verbindungswünsche darstellt. Aufgabe des Ruflenkmoduls ist die Durchführung von Verbindungsversuchen zu vorgebbaren, dem Benutzer TNR zugeordneten Verbindungszielen in einer ebenfalls vorgebbaren Reihenfolge.

Das Ruflenkmodul RLM greift auf Daten zu, welche in einer erfindungsgemäßen Erweiterung der Datenbank DAB, nämlich den unten näher erläuterten Ruflenkeinträgen RLE, enthalten sind. Mittels dieser Informationen ist festgelegt, zu welchen Verbindungszielen die Rufzustellung erfolgen soll, sowie zu welchem Verbindungsziel zuerst ein Verbindungsversuch unternommen werden soll. Der Erstanschluss FAN kann eines der vorgesehenen Verbindungsziele sein; dies ist die Regel, jedoch nicht notwendigerweise der Fall. Auch kann, falls erwünscht, ein Verbindungsziel mehrfach Ziel eines Verbindungsversuchs sein.

In jedem Teilnehmereintrag der Datenbank DAB ist erfindungsgemäß ein Ruflenkmerkmal RLX vorgesehen, welches für jene Teilnehmer bzw. Anschlüsse, für die eine Rufzustellung nach bekannter Art erfolgen soll, nicht gesetzt ist. Ist dagegen in einem Teilnehmereintrag das Ruflenkmerkmal RLX gesetzt, wie beispielsweise für den Eintrag des Benutzers TNR bzw. seiner Rufnummer fnr, so sind weitere Ruflenkeinträge RLE abgelegt, welche das Verhalten des Ruflenkmoduls RLM im Falle eines für den Benutzer TNR unter seiner Erstrufnummer fnr hereinkommenden Verbindungsanforderung festlegen.

Im hier betrachteten Beispiel weist der Teilnehmereintrag des Benutzers TNR vier Ruflenkeinträge RLE auf, deren Inhalt in der nebenstehenden Tabelle 1 wiedergegeben ist.

Das jeweils erste Feld dieser Ruflenkeinträge nennt die laufende Nummer des betreffenden Ruflenkeintrags. Das Feld 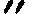 Typ" bezeichnet das Verbindungsziel, welches in dem Beispiel über eine Rufnummer in dem Festnetz FTN oder den anderen Netzen MFN,ZTN geroutet wird; die Bezeichnung des Verbindungsziel kann auf verschiedene Art erfolgen:
a) durch den direkten Bezug auf den Erstanschluss; vgl. Eintrag 2: die zugehörende Erstrufnummer fnr ist als Suchindex bereits bekannt und muss daher nicht in dem Ruflenkeintrag abgelegt sein. 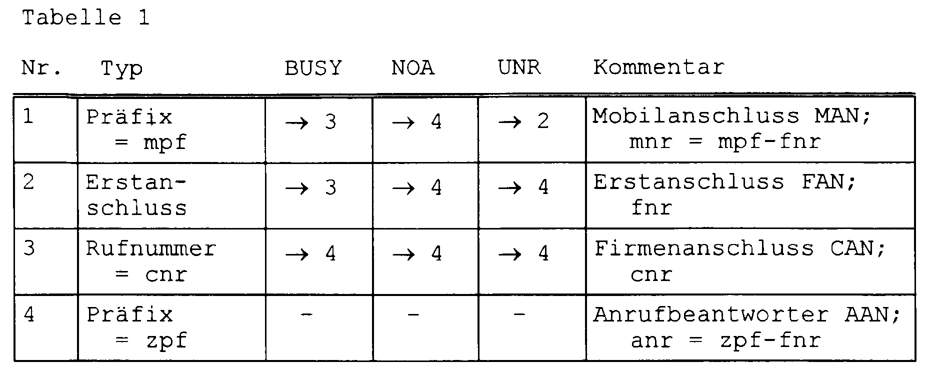
b) durch die Angabe eines Routing-Präfixes; vgl. Einträge 1 und 4: die Nummer des Verbindungszieles mnr,anr wird aus der Erstrufnummer fnr durch Voranstellen des angegebenen Präfixes mpf,zpf erzeugt. Das Präfix ist eine netzinterne Routing-Kennung oder eine Rufnummern-Vorwahl.
c) durch die Angabe der Nummer des Verbindungszieles; vgl. Eintrag 3: die angegebene Nummer cnr wird ungeändert verwendet.

Die nächsten drei Felder BUSY, NOA, UNR legen fest, auf welche Weise das Ruflenkmodul RLM fortsetzen soll, falls keine erfolgreiche Rufzustellung zu dem im Feld 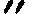 Typ" definierten Verbindungsziel erfolgt ist. Dies geschieht in dem Beispiel durch Verweise auf andere Ruflenkeinträge; in Tabelle 1 sind diese Verweise durch Pfeile mit einer Verweisnummer dargestellt. Das Feld BUSY ( 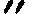 besetzt") bezieht sich auf den Fall eines belegten Anschlusses. Das Feld NOA ('NO Answer', 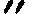 keine Antwort") ist für die Möglichkeit vorgesehen, daß das Rufzeichen durchgestellt wird, jedoch der Ruf innerhalb einer vorgegebenen Zeitdauer - z.B. 20 s - nicht angenommen wird ( 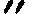 Teilnehmer hebt nicht ab"). Das Feld UNR ('User Not Reachable', 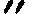 Teilnehmer nicht erreichbar") betrifft den Fall, daß das betreffende Endgerät nicht erreichbar ist, z.B. weil es abgeschaltet ist und nicht reagiert oder es als Mobilteil nicht eingebucht ist. Ist in dem betreffenden Feld ein Verweis angegeben, so wird mit dem angegebenen Ruflenkeintrag fortgesetzt - anderenfalls wird die Rufzustellung abgebrochen. Das letzte Feld ist ein Kommentarfeld, dessen Informationen vom Ruflenkmodul RLM ignoriert werden.

Die Verwendung eines Präfixes in Kombination mit der Erstrufnummer ist dann möglich, wenn in dem betreffenden Netz MFN,ZTN als Teilnehmerrufnummer für den entsprechenden Anschluss MAN,AAN dieselbe Nummer wie für den Erstanschluss FAN verwendet wird. Durch eine solche Maßnahme vereinfacht sich das Routing zu diesem Anschluss MAN,AAN im Laufe einer erfindungsgemäßen Verbindungsherstellung. Für einen Anschluss, von dem aus der Teilnehmer Anrufe tätigen kann, z.B. den Mobilanschluss MAN, ergibt sich als ein weiterer Vorteil der damit verbundenen Zuordnung der Erstrufnummer fnr auch zu dem vom Benutzer subskribierten Mobilanschluss MAN, daß auch für abgehende Rufe des Benutzers BNR nur eine Rufnummer, nämlich die Erstrufnummer fnr, verwendet wird. In dem gezeigten Beispiel etwa wird die Festnetznummer fnr als die sogenannte MSISDN-Nummer für den Mobilanschluss MAN des Benutzers TNR verwendet. Dies entspricht einer Zielsetzung der Erfindung, nämlich die Erreichbarkeit eines Benutzers unter einer Nummer auch in verschiedenen Netzen. Freilich können in anderen Realisierungen der Erfindungen Endgeräte einschließlich Mobilgeräte verwendet werden, denen eigens eine Rufnummer zugewiesen worden ist, wie es in dem hier gezeigten Ausführungsbeispiel für das Schnurlostelefon CTG der Fall ist.

Nach der Erfindung ist die Datenbasis lediglich um ein Kennzeichen, nämlich das Ruflenkmerkmal, zu erweitern; die übrigen Ruflenkeinträge können bei Bedarf auch in einer weiteren, der Datenbasis untergeordneten Datenbank, abgelegt werden. Die Datenbasis kann nach bekannten Verfahren geändert werden; sofern in dem Festnetz FTN ein Zusatzdienst eingerichtet ist, der die Eintragung von Rufumleitungen gestattet, (sogenannte fernaktivierte Rufumleitung) so kann dieser ebenfalls zum Einrichten von Ruflenkungen nach der Erfindung verwendet werden. Auf diese Weise erlaubt die Erfindung die Einrichtung von Rufumlenkungen in andere Netze über den Zusatzdienst des ersten Netzes FTN; der Benutzer muss also lediglich mit den Prozeduren 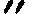 seines" Netzes, nicht jedoch mit denen anderer Netze vertraut sein.

Fig. 2 zeigt in einem Signalisierungsdiagramm, in dem die Zeitachse von oben nach unten verläuft, Signale, welche bei einem erfindungsgemäßen Verbindungsvorgang ( 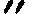 Ruflenkablauf") unter Zugrundelegung der in Tabelle 1 dargestellten Ruflenkeinträge von der Vermittlungsstelle VST empfangen bzw. ausgesendet werden, wenn für die Erstrufnummer fnr des Benutzers TNR eine Verbindungsanforderung vbf hereinkommt. Die Verbindungsanforderung erfolgt in Form eines bekannten Signals, z.B. einer sogenannten IAM-Nachricht der bekannten ISUP-Signalisierung, und geht von einer rufenden Station RST aus, die ohne Einschränkung für die Erfindung ein Teilnehmer RST desselben Netzes FTN oder eines anderen 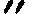 Rufernetzes" RFN,ZTN ebenso wie ein anderer Netzknoten RST' sein kann; als Rufziel ist in der Verbindungsanforderung die Erstrufnummer fnr des Benutzers angegeben. Aufgrund der Verbindungsanforderung vbf wird seitens der Vermittlungsstelle der Teilnehmereintrag, welcher der Rufnummer fnr zugeordnet ist, überprüft; insbesondere wird überprüft, ob das Ruflenkmerkmal RLX gesetzt ist. Falls dieses nicht gesetzt ist, wird der weitere Verbindungsaufbau anhand der Daten des Teilnehmereintrags nach bekannter Art durchgeführt.

Ist dagegen wie in Fig. 1 gezeigt das Ruflenkmerkmal RLX gesetzt, so wird erfindungsgemäß das Ruflenkmodul RLM der Vermittlungsstelle mittels eines entsprechenden Befehles akt aktiviert, welcher die Informationen der Verbindungsanforderung vbf für den folgenden Ruflenkablauf enthält. Das Ruflenkmodul RLM sucht nun in der Datenbasis DAB die Ruflenkeinträge auf, die dem Benutzer TNR über seine erste Rufnummer fnr zugeordnet sind. Im hier betrachteten Beispiel sind diese die in Tabelle 1 dargestellten Einträge. Anhand dieser Ruflenkeinträge werden nun zu den darin angegebenen Verbindungszielen in der angegebenen Reihenfolge durchgeführt.

Das Ruflenkmodul verarbeitet zunächst den Ruflenkeintrag der Nummer 1. Aufgrund des angegebenen Präfixes mpf, welches in diesem Fall eine Routing-Kennung für das Mobilfunknetz MFN darstellt, wird nun die Rufnummer des Verbindungszieles aus der Erstrufnummer fnr durch Voranstellen der Kennung mpf gebildet. Die so erhaltene Rufnummer mnr = mpf-fnr wird in einem Verbindungsversuch als Rufziel verwendet. Bei dem Verbindungsversuch verwendet das Ruflenkmodul RLM die bekannten Betriebsmittel der Vermittlungsstelle; insbesondere erfolgt das Routing zu anderen Netzknoten nach bekannter Art, in diesem Falle also zu dem Gateway-Mobilnetzknoten GMSC.

Seitens des Mobilfunknetzes MFN wird der Verbindungswunsch nach bekannter Art verarbeitet, um den Benutzer TNR über den Mobilanschluss MAN, welcher dem Rufziel mfn zugeordnet ist, zu erreichen. Das Gateway GMSC erhält nach bekannter Art eine Verbindungsanforderung für das Rufziel mfn, streicht von diesem das Routing-Präfix und erhält daraus die netzinterne MSISDN-Nummer, die in diesem Fall mit der Erstrufnummer fnr übereinstimmt. Nach Durchführung des Verbindungsversuchs für den so spezifizierten Mobilanschluss MAN liefert das Gateway GMSC in Abhängigkeit von der Erreichbarkeit des Benutzers TNR über den Mobilanschluss MAN eine Rückmeldung rmd an die Vermittlungsstelle VST, genauer gesagt an das Ruflenkmodul RLM. Ist diese Rückmeldung positiv, z.B. in Form einer sogenannten ANSWER-Nachricht der ISUP-Signalisierung, und zeigt also einen erfolgreichen Verbindungsversuch an, so wird eine entsprechende Antwortnachricht ant an die rufende Station RST geleitet, eine Telekommunikationsverbindung zwischen den Teilnehmern RST,TNR durchgestellt und der Ruflenkablauf für diese Verbindungsanforderung durch das Ruflenkmodul RLM beendet. Jedoch überprüft im Falle einer negativen Rückmeldung, z.B. einer Auslösenachricht von seiten des Netzknotens GMSC, das Ruflenkmodul RLM die Ruflenkeinträge, wie bzw. mit welchem nächsten Verbindungsversuch der Ruflenkablauf fortzusetzen ist. Beispielsweise sei das dem Mobilanschluss MAN zugeordnete Mobilgerät MOG nicht in das Mobilfunknetz MFN eingebucht. Dann enthält die vom Mobilfunknetz MFN an das Ruflenkmodul RLM gesendete Rückmeldung rmd die Angabe, daß der gewünschte Teilnehmer nicht erreichbar ist. Aufgrund dieser Angabe wird nun dem entsprechenden UNR-Feld die Information hinsichtlich des nächsten durchzuführenden Verbindungsversuches entnommen, also in diesem Fall der Verweis auf den Eintrag 2. Somit wird als nächstes eine Verbindungsversuch nach dem Ruflenkeintrag 2 durchgeführt.

Gemäß Ruflenkeintrag 2 wird nun ein Rufzustellversuch rfz zu dem ErstanschlusS FAN bzw. zu dem an diesen Anschluss angeschlossenen Endgerät TEL ausgeführt. In Abhängigkeit von der Reaktion seitens des Endgeräts TEL erhält das Ruflenkmoduls RLM wiederum einer Rückmeldung rmd und setzt in Abhängigkeit von dieser den weiteren Ruflenkablauf fort. Wie bereits dargelegt wurde, wird aufgrund einer positiven Rückmeldung eine entsprechende Antwortnachricht ant an die rufende Station RST geleitet, eine Telekommunikationsverbindung zwischen den Teilnehmern RST,TNR durchgestellt und der Ruflenkablauf für diese Verbindungsanforderung durch das Ruflenkmodul RLM beendet. Jedoch sei auch hier angenommen, daß der Verbindungsversuch nicht erfolgreich ist, in diesem Fall etwa weil der Anschluss FAN bereits belegt ist. Aufgrund dieses Umstands geht das Ruflenkmodul RLM nun gemäß dem BUSY-Feld auf den Eintrag 3 über.

Somit wird, gemäß dem Ruflenkeintrag 3, als nächstes ein Verbindungsversuch zu dem Schnurlosanschluss CAN des Benutzers TNR über die Firmenanlage CTF durchgeführt. Als Rufziel wird die im 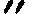 Typ"-Feld angegebene Rufnummer cnr verwendet; im übrigen erfolgt dieser Verbindungsversuch entsprechend den oben behandelten Verbindungsversuchen. Sofern der Verbindungsversuch zu dem Schnurlosanschluss CAN ebenfalls erfolglos ist, wird - unabhängig von dem Grund der negativen Nachricht, da alle in Eintrag 3 angegebenen Verweise gleich lauten - der Ruflenkeintrag 4 verarbeitet.

Aufgrund des Ruflenkeintrags 4 wird dann ein Verbindungsversuch zu dem Anrufbeantworter AAN über den zugeordneten Netzknoten ZST durchgeführt. Falls schließlich auch dieser Verbindungsversuch erfolglos ist, so findet das Ruflenkmodul RLM bei dem Überprüfen des entsprechenden Feldes des Ruflenkeintrags, wie bzw. mit welchem nächsten Verbindungsversuch der Ruflenkablauf fortzusetzen sei, anstelle eines Verweises ein leeres Feld. Aufgrund dieser Angabe wird daher der Verbindungsaufbau abgebrochen und dies nach bekannter Art mit einem entsprechenden Nichterfolgssignal ner der rufenden Station angezeigt.

Aufgrund der Erfindung ist eine Rufzustellung zu den dem Benutzer zugeordneten Anschlüssen in einer individuell vorgebbaren Reihenfolge auf einfache Weise möglich. Die Erfindung ermöglicht ein verbessertes Routing, da Sprechweg-Schleifen von vornherein vermieden werden, welche bei einer Verkettung von Rufumleitungen nach bekannter Art auftreten können. Ist nämlich eine Rufzustellung nicht erfolgreich, dann wird der hierfür aufgebaute Sprechweg schon nach kurzer Zeit bis zurück zu der Vermittlungsstelle VST wieder abgebaut; der nachfolgende Verbindungsversuch erfolgt unabhängig von dem vorhergehenden von der Vermittlungsstelle aus. Im allgemeinen kann man davon ausgehen, daß eine Nichterreichbarkeit des Benutzers an einem Verbindungsziel nach nur sehr geringer Zeit festgestellt und dem Ruflenkmodul RLM mitgeteilt wird, etwa wenn das Mobilgerät des Benutzers im Mobilfunknetz MFN nicht eingebucht ist. Dennoch sollte seitens der Vermittlungsstelle eine Durchsage vorgesehen sein, welche dem Anrufer RST während der Durchführung des Ruflenkablaufs eingespielt wird.

Im Beispiel stimmt die Anzahl der Ruflenkeinträge RLE mit der Anzahl der vom Benutzer TNR verfügbaren Endgeräte überein. Diese können im allgemeinen unterschiedlich sein, z.B. weil nicht alle möglichen Endgeräte oder Verbindungsziele in den Ruflenkeinträgen genannt werden müssen oder weil mehrere Ruflenkeinträge sich auf dasselbe Verbindungsziel beziehen. Darüber hinaus kann in den Ruflenkeinträgen eine Wiederholung des gesamten Verbindungsvorgangs oder eines Teils davon vorgesehen sein. Dies kann z.B. auf einfache Weise durch einen 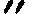 aufsteigenden" Verweis geschehen. In Tabelle 1 könnte z.B. der UNR-Verweis des Eintrags 4 auf den Eintrag 2 verweisen, damit im Falle, daß der Anrufbeantworter vom Benutzer TNR abgeschaltet wurde, zusätzliche Anrufversuche durchgeführt werden. In einem derartigen Fall ist es zweckmäßig, in diesem Verweis eine maximale Gesamtversuchszahl anzugeben; wenn diese erreicht wurde, werden - anstatt dem Verweis zu folgen - die Verbindungsversuche als erfolglos beendet.

Ein einfacheres Beispiel für Ruflenkeinträge gibt Tabelle 2. Abgesehen von - freilich nicht zwingend vorzusehenden - Kommentaren bestehen darin die Ruflenkeinträge lediglich aus der Rufnummern-Informationen der Verbindungsziele in der gewünschten Reihenfolge, während gegenüber Tabelle 1 die Felder für die Verweise die zur Referenzierung genutzte laufende Nummer entfallen. In diesem Fall kann freilich lediglich zwischen 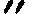 erfolgreicher" - wenn der gerufene Teilnehmer das Gespräch annimmt - und 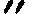 erfolgloser" Rufzustellung - in den übrigen Fällen - unterschieden werden. Die Rufeinträge werden zudem stets in der angegebenen Reihenfolge abgearbeitet, bis eine Rufzustellung erfolgreich ist, insbesondere weil eine Verbindung zwischen der rufenden Station und dem betreffenden Anschluss durchgestellt wird, oder das Ende der Liste der Ruflenkeinträge erreicht ist. Sofern die aufgrund eines Ruflenkeintrags durchgeführte Rufzustellung erfolglos war, wird wie bereits erläutert ein dem soeben behandelten Ruflenkeintrag nachfolgenden Eintrag gesucht, und falls dieser gefunden wird, mit diesem die Rufzustellung fortgesetzt.

Dieses einfachere Ausführungsbeispiel ist besonders für jene, häufig vorkommenden Fälle von Vorteil, in denen der Benutzer über lediglich zwei Anschlüsse verfügt, etwa einen Festnetzanschluss FAN und einen Mobilanschluss MAN, die er jeweils zu Hause bzw. unterwegs nutzen möchte. Für diesen Fall bietet die Erfindung einen einfachen Weg der Realisierung einer

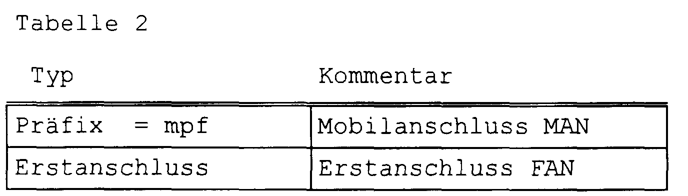

Ruflenkung ohne die Nachteile einer bekannten Rufumleitung, die stets von Hand aktiviert bzw. deaktiviert werden müsste. In einem derartigen Fall ist es besonders vorteilhaft, wenn in beiden Netzen dieselbe Rufnummer fnr für die Anschlüsse FAN,MAN verwendet wird, da dies wegen des verringerten Signalisierungsaufwands sowohl für den Benutzer TNR selbst, als auch für die beteiligten Netze FTN,MFN eine beträchtliche Vereinfachung mit sich bringt.

In einer anderen, in Tabelle 3 gezeigten Variante kann vorgesehen sein, daß im Falle einer Nichterreichbarkeit des Teilnehmers an dem gewünschten Verbindungsziel oder eines belegten Anschlusses eine in dem Teilnehmereinträgen gesetzte Rufumleitung ausgewertet wird. Dies kann durch einen spezifischen Verweis in dem entsprechenden Feld eines Ruflenkeintrags (UNR bzw. BUSY) angezeigt sein; beispielsweise kann dieser Verweis der Form 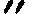 → CF" sein (für 'Call Forwarding', 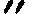 Rufumleitung") wie in Tabelle 3 im BUSY-Feld der Ruflenkeinträge 2 und 3 gezeigt. Die Rufumleitung erfolgt dann nach bekannter Art, ohne Einflussnahme des Ruflenkmoduls RLM; sollte die Rufzustellung zu dem Ersatzziel der Rufumleitung erfolglos sein, wird dies nach bekannter Art der rufenden Station angezeigt. Das Ruflenkmodul RLM dagegen behandelt die Ausführung einer Rufumleitung dieser Art als erfolgreichen Verbindungsversuch.

In einer weiteren Variante können in einem Ruflenkeintrag

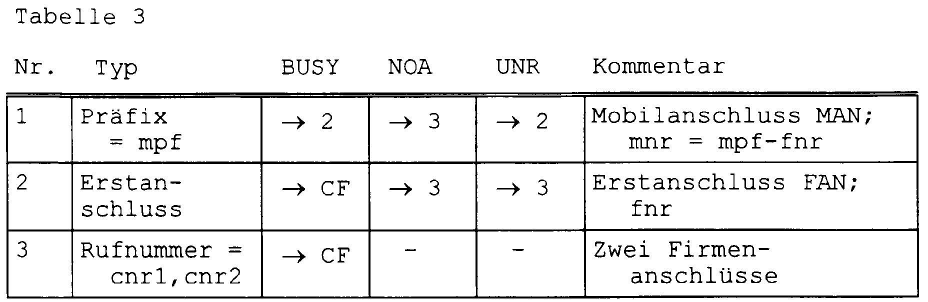

mehrere Rufnummern eingetragen sein. Beispielsweise können wie in Tabelle 3 gezeigt zwei Firmen-Rufnummern cnr1,cnr2 in dem 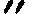 Typ"-Feld des Ruflenkeintrags 3 angegeben sein. Für diese werden dann zugleich Verbindungsversuche durchgeführt. Sobald einer der Versuche erfolgreich verläuft, werden die übrigen Versuche abgebrochen, und der Ruf wird zu dem 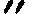 erfolgreichen" Anschluss durchgestellt. Sind dagegen alle Versuche erfolglos, wird nach der Erfindung mit dem nächsten Ruflenkeintrag fortgesetzt; falls für die Rufzustellversuche verschiedene Gründe der Erfolglosigkeit vorliegen, so wird anhand jenes Grundes fortgesetzt, welcher in dem Ruflenkeintrag zuerst genannt ist. Ergibt sich etwa im genannten Beispiel mit der Reihenfolge der Verweis-Felder gemäß BUSY-NOA-UNR, daß der eine Firmenanschluss belegt ist (BUSY), während bei dem anderen Firmenanschluss der Ruf nicht entgegengenommen wird (NOA), so wird entsprechend dem Verweis des BUSY-Feldes fortgesetzt, also mit der Rufumleitung gemäß dem Verweis 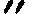 → CF". Ebenso würde ein Nichtannehmen des Rufes (NOA) gegenüber einer Nichterreichbarkeit (UNR) überwiegen.

Die Erfindung kann auch für den Fall angewendet werden, daß anstelle eines Benutzers ein beliebiges Mitglied einer Gruppe von Benutzern gerufen werden soll, wobei es ausreicht, wenn zu einem Mitglied eine Verbindung hergestellt wird. Eine solche Gruppe kann z.B. ein Freundeskreis sein, oder im Außendienst befindliche Angehörige einer Firma. Diese Gruppe kann in dem ersten Netz FTN oder zum Teil oder zur Gänze in anderen Netzen erreichbar sein. Die Reihenfolge, in der Rufversuche für die Mitglieder auszuführen sind, oder ob bestimmte Mitglieder zugleich angerufen werden sollen, kann nach bereits beschriebener Art und Weise erfolgen.

Im Rahmen der Erfindung kann die Vermittlungsstelle VST auch von einer Nebenstellenanlage eines privaten Netzes realisiert werden. Die besondere Art des ersten Netzes FTN und die Rolle der Vermittlungsstelle VST darin ist für die Erfindung nicht von Bedeutung, sofern die Vermittlungsstelle eigenständig Verbindungsversuche initiieren sowie verarbeiten kann.

## Patentansprüche

1. Verfahren zum Aufbau einer Telekommunikationsverbindung von einer rufenden Station (RST) zu einem Teilnehmer (TNR) eines ersten Telekommunikationsnetzes (FTN), in welchem für den Teilnehmer ein erster Anschluss (FAN) über eine Vermittlungsstelle (VST) mit einer teilnehmer- und/oder anschlussbezogene Daten enthaltenden Datenbasis (DAB) eingerichtet ist, bei welchem bei der Vermittlungsstelle (VST) eine Anforderung der rufenden Station (RST) für eine Verbindung zu dem Teilnehmer (TNR) eintrifft,
**dadurch gekennzeichnet**,
daß seitens der Vermittlungsstelle (VST) auf das Eintreffen der Verbindungsanforderung hin in der Datenbasis (DAB) ein dem ersten Anschluss (FAN) zugeordnetes Ruflenkmerkmal (RLX) überprüft wird, und falls dieses gesetzt ist, ein Ruflenkmodul (RLM) aktiviert wird, durch welches
a) die Datenbasis (DAB) nach dem Teilnehmer (TNR) zugeordneten Ruflenkeinträgen (RLE) durchsucht wird, welche in dem ersten Telekommunikationsnetz (FTN) und/oder in anderen Netzen (MFN,ZTN) eingerichtete Anschlüsse (MAN,FAN,AAN, CAN) als dem Teilnehmer (TNR) zugeordnete Verbindungsziele angeben, und
b) anhand der derart aufgefundenen Ruflenkeinträge (RLE) Verbindungsversuche zu den Verbindungszielen in einer durch die Ruflenkeinträge spezifizierten Reihenfolge durchgeführt werden,
wobei für jeden durchgeführten Verbindungsversuch festgestellt wird, ob dieser erfolgreich ist, z.B. weil eine Verbindung zwischen der rufenden Station und dem betreffenden Anschluss durchgestellt wird, und
- im Erfolgsfalle weitere Verbindungsversuche, welche zufolge der Ruflenkeinträge (RLE) durchzuführen wären, unterlassen werden,
- ansonsten aus den Ruflenkeinträgen (RLE) Information hinsichtlich eines nächsten durchzuführenden Verbindungsversuchs bestimmt wird und in Abhängigkeit von dieser Information mit einem nächsten Verbindungsversuch fortgesetzt oder mit einer Signalisierung an die rufende Station (RST) abgebrochen wird.

2. Verfahren nach Anspruch 1,
**dadurch gekennzeichnet**, daß ein Verbindungsversuch als erfolgreich bewertet wird, falls
- eine Verbindung zu dem betreffenden Anschluss durchgestellt wird oder
- der betreffende Anschluss bereits belegt oder das diesem zugeordnete Endgerät nicht erreichbar ist und aufgrund eines Hinweises in den Ruflenkeinträgen (RLE) auf eine für diesen Fall wirksame Rufumleitung ein Verbindungsversuch zu einem durch die Rufumleitung spezifizierten Anschluss durchgeführt wird.

3. Verfahren nach Anspruch 1 oder 2,
**dadurch gekennzeichnet**, daß die Vermittlungsstelle der Verbindungsanforderung eine dem ersten Anschluss (FAN) zugeordnete erste Rufnummer (fnr) entnimmt und diese bei dem Durchsuchen der Datenbasis als Suchbegriff verwendet wird.

4. Verfahren nach einem der Ansprüche 1 bis 3,
daß den Ruflenkeinträgen (RLE) den Verbindungszielen zugeordnete Rufnummern (fnr,mnr,anr,cnr) entnommen und die Verbindungsversuche mit einer Rufzustellung zu jeweils einer dieser Rufnummern initiiert werden.

5. Verfahren nach einem der Ansprüche 1 bis 4,
**dadurch gekennzeichnet**, daß bei einem Verbindungsversuch zu einem in einem fremden Netz (MFN) befindlichen Verbindungsziel die Rufzustellung mittels einer Rufnummer (mnr) erfolgt, welche aus der ersten Rufnummer (fnr) abgeleitet wird.

6. Verfahren nach Anspruch 5,
**dadurch gekennzeichnet**, daß die abgeleitete Rufnummer (mnr) aus der ersten Rufnummer (fnr) durch Hinzufügen eines Routing-Präfix abgeleitet wird.

7. Verfahren nach einem der Ansprüche 1 bis 6,
**dadurch gekennzeichnet**, daß es für als Telefonnetze ausgeführte Telekommunikationsnetze (FTN,MFN) durchgeführt wird.

8. Verfahren nach einem der Ansprüche 1 bis 7,
**dadurch gekennzeichnet**, daß das erste Netz ein privates Telefonnetz ist.

9. Verfahren nach einem der Ansprüche 1 bis 8,
**dadurch gekennzeichnet**, daß die Verbindungsziele, welche nicht in dem ersten Telekommunikationsnetz eingerichtet sind, zumindest jedoch ein Teil dieser Ziele, sich auf in Mobilfunknetzen (MFN) eingerichtete Anschlüsse (MAN) beziehen.

10. Vermittlungsstelle (VST) für ein Telekommunikationsnetz (FTN), in welcher für Teilnehmer Anschlüsse einrichtbar sind und bei welcher eine teilnehmer- und/oder anschlussbezogene Daten enthaltenden Datenbasis (DAB) vorgesehen ist,
**gekennzeichnet durch**
ein Ruflenkmodul, welches infolge eines bei der Vermittlungsstelle eintreffenden Anforderung einer rufenden Station (RST) für eine Verbindung zu einem der Vermittlungsstelle zugeordneten Teilnehmer (TNR), für welchen in der Vermittlungsstelle (VST) ein erster Anschluss (FAN) eingerichtet ist, aktivierbar und dazu eingerichtet ist,
a) die Datenbasis (DAB) nach dem Teilnehmer (TNR) zugeordneten Ruflenkeinträgen (RLE) zu durchsuchen, welche in dem ersten Telekommunikationsnetz (FTN) und/oder in anderen Netzen (MFN,ZTN) eingerichtete Anschlüsse (MAN, FAN,AAN,CAN) als dem Teilnehmer (TNR) zugeordnete Verbindungsziele angeben, und
b) anhand der derart aufgefundenen Ruflenkeinträge (RLE) Verbindungsversuche zu den Verbindungszielen in einer durch die Ruflenkeinträge spezifizierten Reihenfolge durchzuführen,
und hierbei für jeden durchgeführten Verbindungsversuch festzustellen, ob dieser erfolgreich ist, z.B. aufgrund des Durchstellens einer Verbindung zwischen der rufenden Station und dem betreffenden Anschluss, und
- im Erfolgsfalle weitere Verbindungsversuche, welche zufolge der Ruflenkeinträge (RLE) durchzuführen wären, zu unterlassen,
- ansonsten in Abhängigkeit von aus den Ruflenkeinträgen (RLE) bestimmter Information hinsichtlich eines nächsten durchzuführenden Verbindungsversuchs mit diesem Verbindungsversuch fortzusetzen oder mit einer Signalisierung an die rufende Station (RST) abzubrechen.

11. Vermittlungsstelle nach Anspruch 10,
**dadurchgekennzeichnet**, daß das Ruflenkmodul (RLM) dazu eingerichtet ist, einen Verbindungsversuch, als erfolgreich zu bewerten:
- aufgrund des Durchstellens einer Verbindung zwischen der rufenden Station und dem betreffenden Anschluss oder
- aufgrund der Feststellung, daß der betreffende Anschluss bereits belegt oder das diesem zugeordnete Endgerät nicht erreichbar ist sowie in den Ruflenkeinträgen (RLE) auf eine für diesen Fall wirksame Rufumleitung gesetzt ist.

12. Vermittlungsstelle nach Anspruch 10 oder 11,
**dadurch gekennzeichnet**, daß das Ruflenkmodul dazu eingerichtet ist, dem Durchsuchen der Datenbasis eine der Verbindungsanforderung entnommene, dem ersten Anschluss (FAN) zugeordnete erste Rufnummer (fnr) als Suchbegriff zugrunde zu legen.

13. Vermittlungsstelle nach einem der Ansprüche 10 bis 12,
**dadurch gekennzeichnet**, daß in den Ruflenkeinträgen (RLE) den Verbindungszielen zugeordnete Rufnummern (fnr,mnr,anr,cnr) angegeben sind, welche in den Verbindungsversuchen als Zielrufnummern verwendbar sind.

14. Vermittlungsstelle nach einem der Ansprüche 10 bis 13,
**dadurch gekennzeichnet**, daß in der Datenbasis (DAB) für Teilnehmeranschlüsse (FAN) bzw. Teilnehmerrufnummern (fnr) ein Ruflenkmerkmal (RLX) vorgesehen ist, welches anzeigt, ob bei einer Verbindungsanforderung für den betreffenden Teilnehmer das Ruflenkmodul (RLM) zu aktivieren ist.

15. Vermittlungsstelle nach einem der Ansprüche 10 bis 14,
**dadurch gekennzeichnet**, daß sie als Telefonvermittlungsstelle realisiert ist.

16. Vermittlungsstelle nach einem der Ansprüche 10 bis 15,
**dadurch gekennzeichnet**, daß sie als Nebenstellenanlage für ein privates Telefonnetz realisiert ist.

17. Vermittlungsstelle nach einem der Ansprüche 10 bis 16,
**dadurch gekennzeichnet**, daß die Verbindungsziele, welche nicht in dem ersten Telekommunikationsnetz eingerichtet sind, zumindest jedoch ein Teil dieser Ziele, als in Mobilfunknetzen (MFN) eingerichtete Anschlüsse (MAN) realisiert sind.
